# EUROPEAN PATENT SPECIFICATION

(11) **EP 1 932 692 B1**
(45) Date of publication and mention of the grant of the patent: **23.06.2010**
(21) Application number: 07122575.9
(22) Date of filing: 07.12.2007
(51) Int. Cl.: B60G 7/02, F16F 1/38, F16C 11/04, B62D 17/00

(54) **An articulation device, particularly for a motor-vehicle supsension arm**
Gelenkvorrichtung, insbesondere für einen Aufhängungsarm eines Kraftfahrzeugs
Dispositif d'articulation, particulièrement pour un bras de suspension d'un véhicule à moteur

(30) Priority: 11.12.2006 IT TO20060877
(43) Date of publication of application: 18.06.2008
(73) Proprietor: FIAT AUTO S.p.A., 10135 Torino (IT)
(72) Inventor: Crosetti, Andrea, 10135 Torino (IT); Puntillo, Rocco, 10135 Torino (IT)
(74) Representative: Quinterno, Giuseppe

(56) References cited:
- EP-A- 1 577 126
- EP-A- 1 676 732
- EP-A1- 0 001 752
- WO-A-00/51833
- WO-A-99/36279
- WO-A-2004/055406
- DE-A1- 3 613 123
- JP-A- 10 318 312
- JP-A- 11 321 260
- JP-A- 2000 238 662
- JP-A- 2003 294 084
- JP-A- 2004 144 150
- JP-U- 3 084 276
- US-A- 2 162 828
- US-A- 4 327 995
- US-A- 5 398 411

## Description

The present invention relates to an articulation device, particularly for a motor-vehicle suspension arm, of the kind defined in the preamble of Claim 1.

DE 36 13 123 A1 discloses a device of this kind wherein the core member has an opening with the axis inclined by a predetermined angle with respect to the axis of the articulation.

EP 1577126 discloses an articulation device where in the core member is inclined by a predetermined angle with respect to the axis of the articulation, the core member being integral with mounting portions.

JP 2000 238662 and US 2162828 also show relevant articulations where the core member is integral with mounting portions.

An object of the present invention is to provide an improved articulation device of the above- defined kind.

This and other objects are achieved, according to the invention, by an articulation device of having the features defined in Claim 1.

In use in a motor-vehicle suspension, the device according to the invention permits the fitting of a preassembled suspension unit which can subsequently be adjusted along a reference axis, ensuring that the designed geometrical characteristics are maintained.

Further characteristics and advantages of the present invention will become clear from the following detailed description which is given purely by way of non-limiting example, with reference to the appended drawings, in which:
Figure 1 is a partial perspective view of a motor-vehicle suspension arm provided, at one end, with an articulation device according to the present invention,
Figure 2 is a section taken substantially on the line II-II of Figure 1, and
Figure 3 is a partial perspective view which shows a mounting portion of an articulation device according to the present invention.

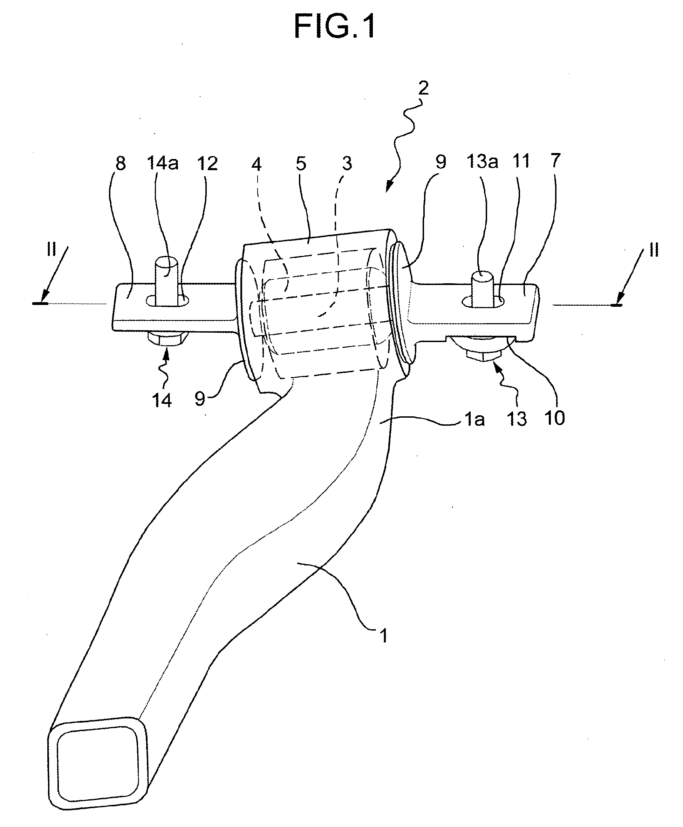

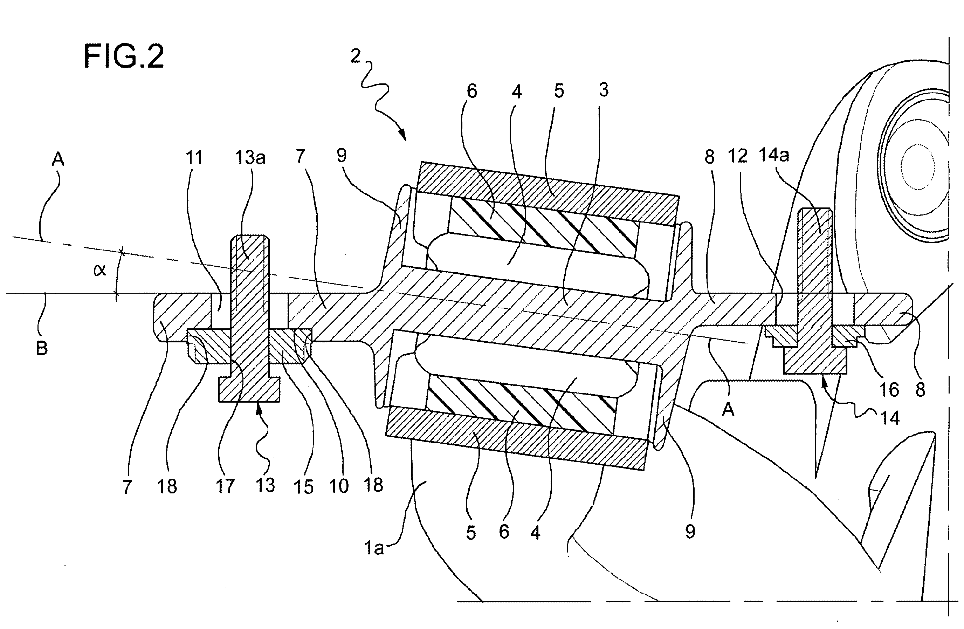

A shaped motor-vehicle suspension arm is generally indicated 1 in Figures 1 and 2. The arm is, for example, a rear-suspension trailing arm.

An articulation device according to the present invention, generally indicated 2, is associated with an end 1a of the arm 1. In the embodiment shown, the device 2 comprises a cylindrical core 3, the longitudinal axis A-A of which defines the articulation axis of the device as a whole.

The articulation device 2 further comprises an inner cylindrical bush 4, for example, made of metal, mounted on the core 3 so as to be rotatable about the axis A-A.

An outer cylindrical bush 5 is connected to or formed integrally with the end 1a of the arm 1 and is connected to the inner bush 4 by means of an intermediate connection element 6 made of resiliently yielding material, for example, elastomeric material.

With reference to Figure 2 in particular, the core 3 of the articulation device 2 is formed integrally, that is in a single piece, with a pair of opposed, substantially flat mounting portions 7 and 8 the upper faces of which are intended to be fitted on a portion of a load-bearing structure such as a portion of a motor-vehicle floor or body.

Two transverse portions or flanges, indicated 9 are formed integrally at the end of the core 3, that is as a single piece therewith, to confine the elements of the articulation device laterally.

The mounting portions 7 and 8 and in particular their upper faces, which preferably lie in a common plane B, are inclined to the articulation axis A-A at a predetermined angle α (Figure 2) corresponding to the designed angle between the articulation axis A-A and the plane of the attachments to the load-bearing structure such as a motor-vehicle floor or body.

By virtue of this characteristic, the articulation device according to the invention can be fitted and secured directly on the load-bearing structure without the need to interpose any additional interface element.

In the embodiment shown, the mounting portions 7 and 8 have respective holes 11 and 12 through which the shanks 13a, 14a of respective screw members 13, 14 can extend with ample radial clearance; the screw members 13, 14 are to be screwed into corresponding threaded holes provided in the load-bearing structure to which the articulation device is to be secured.

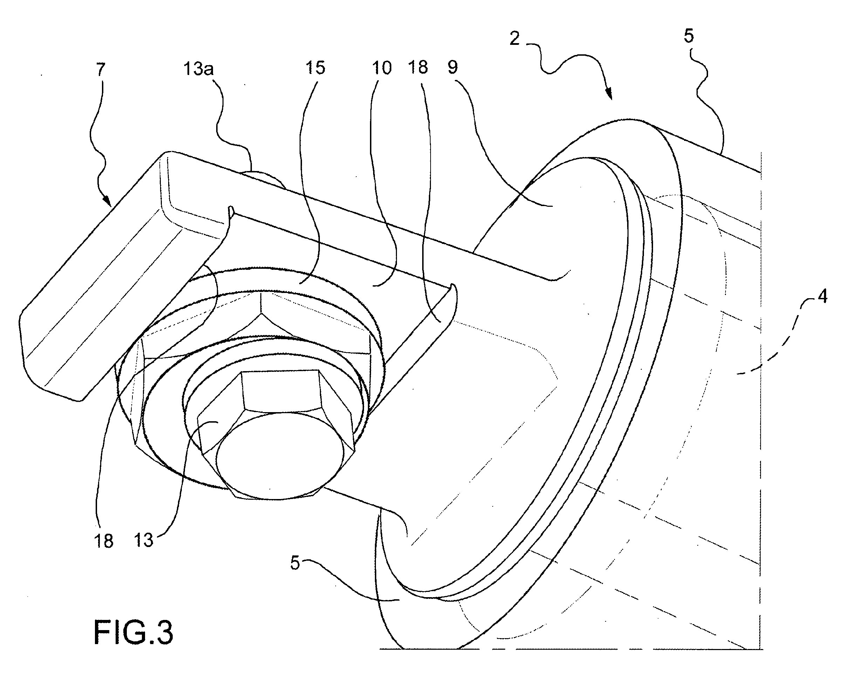

With reference to Figures 1 and 2 in particular, the screw member 14 also extends through a washer-like spacer member 16 which has a diameter larger than that of the hole 12 and which can be moved (to a limited extent) relative to the axis of the hole 12 at the adjustment stage.
A recess 10 formed in the lower face of the other mounting portion 7 has a pair of substantially parallel opposed walls 18 (see Figures 2 and 3 in particular).

A generally annular spacer member 15 is arranged slidingly and rotatably in the recess 10 between the side walls 18 and has an eccentric through-hole 17 through which the shank 13a of the screw member 13 extends (Figure 2).

The spacer member 15 advantageously has a shape such that it can be rotated by a tool. In the embodiment shown, this shape is hexagonal so that the spacer member 15 can be rotated by a normal hexagonal socket wrench.

The position in which the articulation device 2 is secured to the associated load-bearing structure is adjusted with the screws 13 and 14 slackened; in this condition, a rotation of the spacer member 15, which acts as a cam member by interacting with the opposed surfaces or faces 18 of the recess 10, can bring about a modification of the position of the articulation device 2 relative to the load-bearing structure to which it is to be fixed firmly.

The precise mounting position can thus be adjusted extremely easily.

When the mounting position has been adjusted, the screws 13 and 14 can be tightened in order to stabilize the positioning.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. An articulation device (2) particularly for a motor-vehicle suspension arm (1), including:
a cylindrical core (3) the longitudinal axis (A-A) of which defines the articulation axis,
an inner cylindrical bush (4) mounted on the core (3) so as to be rotatable about the axis (A-A),
an outer cylindrical bush (5) connected to or integral with an element (1) of an articulated structure such as a motor-vehicle rear-suspension trailing arm (1), the outer bush (5) being connected to the inner bush (4) by means of at least one intermediate connecting element (6) made of resiliently yielding material, and
at least one mounting portion (7) which is formed integral with the core (3) and enables the device (2) to be secured on a portion of a load-bearing structure such as a motor-vehicle floor or body that extends in a plane (B) which is inclined at a predetermined angle (α) to the articulation axis (A-A), whereby said mounting portion is inclined to the articulation axis (A-A) at an angle (a) equal to predetermined angle (a);
the at least one mounting portion (7) has a hole (11) through which a screw fixing member (13,13a) for fixing the mounting portion (7) to the load-bearing structure can extend with radial clearance;
adjustment means being associated with the screw member (13, 13a), allowing the relative position of mounting of the articulation device (2) on the load-bearing structure to be adjusted in the above-mentioned plane (B);
the articulation device (2) being **characterized by** said adjustment means comprising a recess (10) provided in the at least one mounting portion (7), and
a spacer member (15) which is mounted so as to be slidable and rotatable in the recess (10) between two opposed walls (18) thereof, and which has an eccentric through-hole (17) through which extends the screw member (13, 13a) for fixing the mounting portion (7) to the load-bearing structure,
the arrangement being such that a rotation of the spacer element (15) in the recess (10) about said screw member (13, 13a) is able to bring about a translational movement of the mounting portion (7) in a direction substantially perpendicular to the opposed walls (18) of the recess (10).

2. An articulation device (2) according to Claim 1, in which the spacer member (15) has a shape such that it is able to be engaged and rotated by a tool.

3. motor-vehicle suspension arm (1), in particular a rear-suspension trailing arm, comprising an articulation device (2) according to one or both of the preceding claims.

4. A motor-vehicle suspension, in particular a rear suspension, comprising one or more articulation devices (2) according to Claim 1 of Claim 2.

## Patentansprüche

1. Gelenkvorrichtung (2), insbesondere für einen Kraftfahrzeug-Aufhängungsarm (1), enthaltend:
einen zylindrischen Kern (3), dessen Längsachse (A-A) die Gelenkachse definiert,
eine innere Zylinderbuchse (4), die an dem Kern (3) derart befestigt ist, dass sie um die Achse (A-A) drehbar ist,
eine äußere Zylinderbuchse (5), die mit einem Element (1) einer Gelenkstruktur, wie etwa einem hinteren Kraftfahrzeug-Aufhängungslängslenker (1) verbunden oder integraler Bestandteil desselben ist, wobei die äußere Buchse (5) mit der inneren Buchse (4) durch wenigstens ein Zwischenverbindungselement (6) verbunden ist, dass aus einem federnd nachgiebigen Material besteht, und
wenigstens einen Montageabschnitt (7), der integral mit dem Kern (3) ausgebildet ist und es ermöglicht, die Vorrichtung (2) an einem Abschnitt einer lasttragenden Struktur, wie etwa einem Kraftfahrzeugunterboden oder -körper, zu befestigen, der sich in einer Ebene (B) erstreckt, die in einem vorbestimmten Winkel (α) zu der Gelenkachse (A-A) geneigt ist, wobei der Montageabschnitt zur Gelenkachse (A-A) in einem Winkel (α) geneigt ist, der gleich dem vorbestimmten Winkel (α) ist;
wobei der wenigstens eine Montageabschnitt (7) ein Loch (11) hat, durch das ein Schraubenbefestigungselement (13, 13a) zum Befestigen des Montageabschnittes (7) an der lasttragenden Struktur mit einem radialen Abstand verlaufen kann, und
Einstelleinrichtungen mit dem Schraubenelement (13, 13a) verbunden sind, die es gestatten, die relative Montageposition der Gelenkvorrichtung (2) an der lasttragenden Struktur in der oben erwähnten Ebene (B) einzustellen;
wobei die Gelenkvorrichtung (2) **dadurch gekennzeichnet ist, dass** die Einstelleinrichtung eine Aussparung (10) enthält, die in dem wenigstens einen Montageabschnitt (7) vorgesehen ist, und
ein Abstandselement (15), das derart angebracht ist, dass es in der Aussparung (10) zwischen zwei gegenüberliegenden Seiten (18) derselben verschiebbar und drehbar ist und ein exzentrisches Durchgangsloch (17) aufweist, durch das sich das Schraubenelement (13, 13a) zum Befestigen des Montageabschnittes (7) an der lasttragenden Struktur erstreckt,
wobei die Anordnung derart beschaffen ist, dass eine Drehung des Abstandselementes (15) in der Aussparung (10) um das Schraubenelement (13, 13a) in der Lage ist, eine Translationsbewegung des Montageabschnittes (7) in einer Richtung im wesentlichen senkrecht zu den gegenüberliegenden Wänden (18) der Aussparung (10) zu bewirken.

2. Gelenkvorrichtung (2) nach Anspruch 1, bei der das Abstandselement (15) eine Form hat, die derart beschaffen ist, dass sie mit einem Werkzeug in Eingriff gelangen und von diesem gedreht werden kann.

3. Kraftfahrzeug-Aufhängungsarm (1) insbesondere ein hinterer Aufhängungslängslenker, der eine Gelenkvorrichtung (2) nach einem oder beiden der vorhergehenden Ansprüche enthält.

4. Kraftfahrzeugaufhängung, insbesondere eine hintere Aufhängung, die wenigstens eine Gelenkvorrichtung (2) gemäß Anspruch 1 oder 2 enthält.

## Revendications

1. Dispositif d'articulation (2) en particulier pour un bras de suspension de véhicule automobile (1), comprenant :
une âme cylindrique (3) dont l'axe longitudinal (A-A) définit l'axe d'articulation,
un manchon cylindrique intérieur (4) monté sur l'âme (3) de façon à pouvoir tourner autour de l'axe (A-A),
un manchon cylindrique extérieur (5) relié à ou faisant partie intégrante d'un élément (1) d'une structure articulée telle qu'un bras tiré de suspension arrière de véhicule automobile (1), le manchon extérieur (5) étant relié au manchon intérieur (4) au moyen d'au moins un élément de raccordement intermédiaire (6) fabriqué dans une matière élastique, et
au moins une partie de montage (7) qui est formée d'un seul tenant avec l'âme (3) et permet au dispositif (2) d'être fixé sur une partie d'une structure porteuse telle qu'un plancher ou une carrosserie de véhicule automobile qui s'étend dans un plan (B) qui est incliné avec un angle prédéterminé (α) par rapport à l'axe d'articulation (A-A), de sorte que ladite partie de montage est inclinée par rapport à l'axe d'articulation (A-A) avec un angle (a) égal à l'angle prédéterminé (a) ;
la au moins une partie de montage (7) a un trou (11) à travers lequel un élément de fixation à vis (13, 13a) destiné à fixer la partie de montage (7) sur la structure porteuse peut s'étendre avec un jeu radial ;
des moyens d'ajustement étant associés à l'élément de vis (13, 13a), permettant à la position relative de montage du dispositif d'articulation (2) sur la structure porteuse d'être ajustée dans le plan mentionné ci-dessus (B) ;
le dispositif d'articulation (2) étant **caractérisé par** lesdits moyens d'ajustement qui comportent un renfoncement (10) prévu dans la au moins une partie de montage (7), et
un élément d'entretoise (15) qui est monté de façon à pouvoir coulisser et tourner dans le renfoncement (10) entre deux parois opposées (18) de celui-ci, et qui a un trou débouchant excentrique (17) à travers lequel s'étend l'élément de vis (13, 13a) destiné à fixer la partie de montage (7) sur la structure porteuse,
l'agencement étant tel qu'une rotation de l'élément d'entretoise (15) dans le renfoncement (10) autour dudit élément de vis (13, 13a) est capable de provoquer un mouvement de translation de la partie de montage (7) dans une direction sensiblement perpendiculaire aux parois opposées (18) du renfoncement (10).

2. Dispositif d'articulation (2) selon la revendication 1, dans lequel l'élément d'entretoise (15) a une forme telle qu'il peut être engagé et tourné par un outil.

3. Bras de suspension de véhicule automobile (1), en particulier un bras tiré de suspension arrière, comportant un dispositif d'articulation (2) selon une des ou les deux revendications précédentes.

4. Suspension de véhicule automobile, en particulier une suspension arrière, comportant un ou plusieurs dispositifs d'articulation (2) selon la revendication 1 ou la revendication 2.
